# EUROPÄISCHE PATENTSCHRIFT

(11) **EP 2 684 776 B1**
(45) Veröffentlichungstag und Bekanntmachung des Hinweises auf die Patenterteilung: **10.05.2017**
(21) Anmeldenummer: 13001184.4
(22) Anmeldetag: 09.03.2013
(51) Int. Cl.: B62D 21/02

(54) **Rahmentragstruktur mit einer dritten längsverlaufenden Tragkonstruktion**
Frame support structure with a third longitudinal supporting structure
Structure de support de cadre avec une troisième structure portante longitudinale

(30) Priorität: 13.07.2012 DE 102012013905
(43) Veröffentlichungstag der Anmeldung: 15.01.2014
(73) Patentinhaber: MAN Truck & Bus AG, 80995 München (DE)
(72) Erfinder: Sattler, Steve, 81375 München (DE); Hintereder, Jürgen, 80997 München (DE)
(74) Vertreter: v. Bezold & Partner Patentanwälte - PartG mbB

(56) Entgegenhaltungen:
- DE-B3-102006 009 189
- FR-A1- 2 398 654
- US-A- 1 629 320
- US-A- 4 313 518
- US-A1- 2008 122 213
- US-A1- 2010 170 739

## Beschreibung

Die Erfindung betrifft eine Rahmentragstruktur für ein Nutzfahrzeug, insbesondere einen Lastkraftwagen, vorzugsweise eine Sattelzugmaschine. Die DE 10 2006 009 189 B3 offenbart eine Rahmentragstruktur nach dem Oberbegriff des unabhängigen Anspruchs 1. Rahmentragstrukturen, insbesondere Fahrgestelle, für Sattelzugmaschinen sind in den unterschiedlichsten Ausführungsformen bekannt. Die Rahmentragstrukturen sind üblicherweise leiterrahmenförmig ausgeführt und umfassen zwei in Querrichtung der Rahmentragstruktur voneinander beabstandete Längsträger und mehrere Querträger. Die Rahmentragstrukturen sind üblicherweise mit Lenkelemente umfassenden Radaufhängungen für die Vorderräder des Nutzfahrzeugs verbunden. Üblicherweise müssen die Kräfte aus den Lenkelementen über konsolenförmige Versatzteile in die Längsträger nach oben eingeleitet werden, was mit einem ungünstigen Kraftflussverlauf und insbesondere einer nachteilhaft starken Biegebeanspruchung einhergeht.

Eine Aufgabe der Erfindung ist es, eine verbesserte und/oder alternative Rahmentragstruktur für ein Nutzfahrzeug zu schaffen.

Diese Aufgabe wird mit den Merkmalen des Hauptanspruchs gelöst. Vorteilhafte Weiterbildungen sind den Unteransprüchen zu entnehmen.

Die Erfindung schafft eine Rahmentragstruktur für ein Nutzfahrzeug, insbesondere Lastkraftwagen, vorzugsweise Sattelzugmaschine. Die Rahmentragstruktur dient vorzugsweise mitunter zum Tragen eines Fahrerhauses. Die Rahmentragstruktur umfasst eine erste längsverlaufende Tragkonstruktion und eine zweite längsverlaufende Tragkonstruktion, die in Querrichtung der Rahmentragstruktur voneinander beabstandet sind. Die Rahmentragstruktur umfasst zudem zwei Radaufhängungen für Vorderräder für das Nutzfahrzeug und/oder zumindest eine Tankeinrichtung zur Fluidaufnahme, insbesondere einen Kraftstofftank zur Aufnahme eines Kraftstoffs zum Betrieb einer Motoreinrichtung zum Antreiben des Nutzfahrzeugs und/oder ein Lufttank zur Aufnahme von Luft.

Die Rahmentragstruktur zeichnet sich durch eine dritte längsverlaufende Tragkonstruktion aus. Die dritte Tragkonstruktion kann z.B. zumindest abschnittsweise aus Hohlprofilelementen ausgeführt sein, z.B. runden oder rechteckförmigen Hohlprofilelementen. Alternativ oder ergänzend kann sie auch z.B. aus U-, I- oder L-Profilelementen ausgeführt werden. Die dritte Tragkonstruktion ist mit Lenkelementen (z.B. Quer-, Schräg- und/oder Längslenkerelemente) der Radaufhängungen verbunden. Die dritte Tragkonstruktion dient vorzugsweise dazu, Kräfte aus den Radaufhängungen aufzunehmen, insbesondere z.B. im Wesentlichen horizontal wirkende Kräfte aus den Lenkelementen der Radaufhängungen.

Es ist möglich, dass die Tankeinrichtung und/oder die erste Tragkonstruktion und die zweite Tragkonstruktion oben auf oberen Enden der Feder- und/oder Dämpferelemente der Radaufhängungen angeordnet sind und vorzugsweise dazu dienen, im Wesentlichen vertikal wirkende Kräfte aus den Feder- und/oder Dämpferelementen der Radaufhängungen aufzunehmen.

Es ist möglich, dass die dritte Tragkonstruktion zumindest abschnittsweise zwischen der ersten Tragkonstruktion und der zweiten Tragkonstruktion verläuft und zwar vorzugsweise mittig dazwischen.

Vorzugsweise verläuft die dritte Tragkonstruktion unter dem Niveau der ersten Tragkonstruktion und der zweiten Tragkonstruktion und z.B. im Wesentlichen auf dem Niveau der Lenkelemente der Radaufhängungen.

Die dritte Tragkonstruktion kann z.B. unter dem Niveau der Radmittelpunkte der Vorderräder für das Nutzfahrzeug verlaufen. Die dritte Tragkonstruktion verläuft zwischen den Vorderrädern für das Nutzfahrzeug und ragt über deren Radmittelpunkte z.B. in Längsrichtung nach vorne hinaus.

Die dritte Tragkonstruktion kann über eine Verbindungskonstruktion mit der ersten Tragkonstruktion und der zweiten Tragkonstruktion verbunden sein, wodurch vorzugsweise ein Raumtragwerk geschaffen werden kann. Die Verbindungskonstruktion kann z.B. ausgeführt sein als Querträger, der vorzugsweise eine im Wesentlichen U-förmige Gestalt aufweist, als Diagonalverstrebung, die vorzugsweise eine im Wesentlichen V-förmige oder triangulierte Gestalt aufweist, und/oder als Tankeinrichtung (z.B. Kraftstofftank und/oder Lufttank), die vorzugsweise als Queraussteifungskonstruktion wirkt.

Die dritte Tragkonstruktion dient zudem zur Abstützung der Tankeinrichtung und/oder einer Motoreinrichtung zum Antreiben des Nutzfahrzeugs (z.B. ein Verbrennungsmotor, ein Dieselmotor und/oder ein Elektromotor) und verläuft vorzugsweise darunter. Es ist möglich, dass die Tankeinrichtung und/oder die Motoreinrichtung zum Antreiben des Nutzfahrzeugs zwischen der ersten Tragkonstruktion, der zweiten Tragkonstruktion und der dritten Tragkonstruktion aufgenommen wird und vorzugsweise von diesen getragen wird. Die erste Tragkonstruktion, die zweite Tragkonstruktion und die dritte Tragkonstruktion bilden somit insbesondere einen Aufnahmeraum für die Tankeinrichtung und/oder die Motoreinrichtung.

Die Tankeinrichtung wird vorzugsweise aus einem oder mehreren im Wesentlichen hohlplattenförmigen Tankabschnitten ausgebildet. Ein hohlplattenförmiger Tankabschnitt kann z.B. im Wesentlichen horizontal ausgerichtet sein. Ein anderer hohlplattenförmiger Tankabschnitt kann z.B. im Wesentlichen vertikal ausgerichtet sein. Es ist möglich, dass der zumindest eine hohlplattenförmige Tankabschnitt die erste Tragkonstruktion mit der zweiten Tragkonstruktion verbindet und/oder baulich in die erste Tragkonstruktion und die zweite Tragkonstruktion integriert ist.

Die Tankeinrichtung kann z.B. ein im Wesentlichen hohlplattenförmiges Bodenteil und zwei im Wesentlichen hohlplattenförmige äußere Schenkelteile umfassen, die vorzugsweise eine im Wesentlichen U-förmige Gestalt bilden.

Es ist ebenso möglich, dass die Tankeinrichtung einen im Wesentlichen horizontalen Flanschteil und einen von dem Flanschteil erstreckenden Stegteil umfasst, die vorzugsweise eine im Wesentlichen L-, T- oder V-förmige Gestalt bilden.

Die Erfindung umfasst außerdem ein Nutzfahrzeug, insbesondere Lastkraftwagen, vorzugsweise Sattelzugmaschine.

Zu erwähnen ist, dass das Merkmal "zwischen" vorzugsweise so zu verstehen ist, dass es insbesondere die Positionierung in Querrichtung und/oder in Längsrichtung der Rahmentragstruktur definiert, während die Positionierung in Vertikalrichtung der Rahmentragstruktur nicht eingeschränkt wird, es sei denn, die Positionierung in Vertikalrichtung wird ausdrücklich spezifiziert.

Außerdem ist noch zu erwähnen, dass die Tankeinrichtung einen oder mehrere Tankabschnitte umfassen kann.

Zu erwähnen ist noch, dass die erfindungsgemäße Rahmentragstruktur bzw. die erste Tragkonstruktion und die zweite Tragkonstruktion insbesondere nicht auf zumindest abschnittsweise aus Tragprofilelementen (z.B. Hohl-, U-, I- oder L-Tragprofilelemente) ausgeführte (z.B. leiterrahmenförmige) Ausführungsformen beschränkt ist, sondern z.B. auch zumindest abschnittsweise monocoqueförmige oder semi-monocoqueförmige Ausführungsformen umfasst. Darunter werden insbesondere schalenförmige Strukturen verstanden, die zweckmäßig selbsttragend ausgebildet sind (z.B. aus Blech-, Tiefzieh- oder Verbundmaterial).

Die vorstehend beschriebenen Merkmale und bevorzugten Ausführungsformen der Erfindung sind beliebig miteinander kombinierbar. Andere vorteilhafte Weiterbildungen der Erfindungen sind in den Unteransprüchen offenbart oder ergeben sich aus der nachstehenden Beschreibung bevorzugter Ausführungsformen der Erfindung in Verbindung mit den beigefügten Figuren.
- Fig. 1: zeigt eine perspektivische Ansicht einer Rahmentragstruktur für ein Nutzfahrzeug gemäß einer Ausführungsform der Erfindung,
- Fig. 2: zeigt eine Draufsicht auf die Rahmentragstruktur der Fig. 1,
- Fig. 3: zeigt eine Seitenansicht der Rahmentragstruktur der Figuren 1 und 2,
- Fig. 4: zeigt eine Schnittansicht der Rahmentragstruktur der Figuren 1 bis 3,
- Fig. 5: zeigt eine Seitenansicht einer Rahmentragstruktur für ein Nutzfahrzeug gemäß einer anderen Ausführungsform der Erfindung,
- Fig. 6: zeigt eine Draufsicht auf die Rahmentragstruktur der Fig. 5, und
- Fig. 7: zeigt eine perspektivische Ansicht der Rahmentragstruktur der Figuren 5 und 6.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung anderer Ausführungsformen oder Figuren verwiesen wird, um Wiederholungen zu vermeiden.

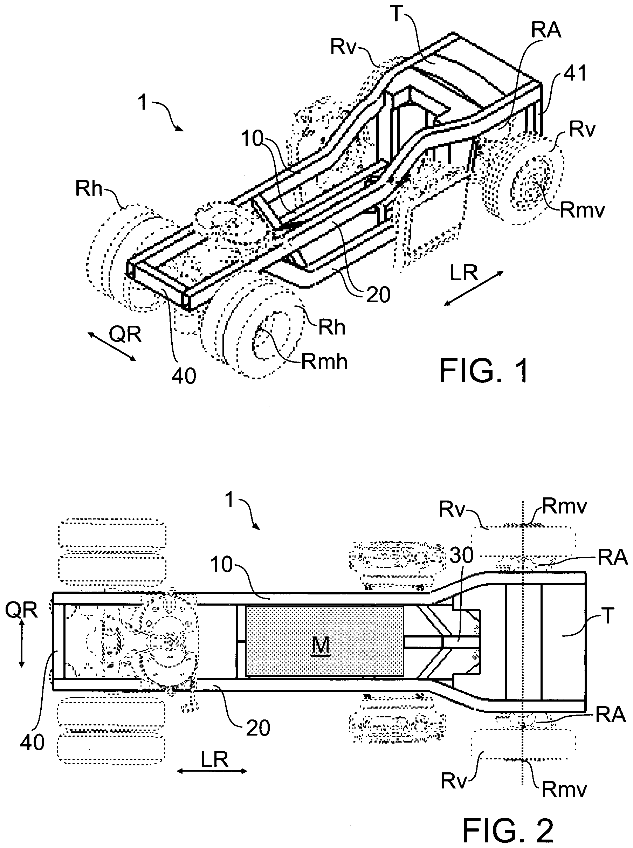

Figur 1 zeigt eine perspektivische Ansicht einer ein Fahrgestell für eine Zugmaschine (Sattelzugmaschine) bildenden Rahmentragstruktur 1, die mit einer Sattelplatte versehen ist und mitunter zum Tragen eines Fahrerhauses (nicht dargestellt) für die Zugmaschine dient.

Die Rahmentragstruktur umfasst eine erste in Längsrichtung LR der Rahmentragstruktur 1 verlaufende Tragkonstruktion 10 und eine zweite in Längsrichtung LR der Rahmentragstruktur 1 verlaufende Tragkonstruktion 20, die in Querrichtung QR der Rahmentragstruktur 1 voneinander beabstandet sind und als Rechteckhohlprofile ausgeführt sind. Die Rahmentragstruktur 1 umfasst ferner mehrere Querträger, z.B. einem hinteren Querträger 40 und einen vorderen Querträger 41, die ebenfalls als Rechteckhohlprofile ausgeführt sind.

Die Rahmentragstruktur 1 umfasst seitlich außen an der ersten Tragkonstruktion 10 einen Motorkühler und seitlich außen an der zweiten Tragkonstruktion 20 einen Ladeluftkühler. Die Rahmentragstruktur 1 ist zudem mit lenkbaren Vorderrädern Rv und einer Hinterachse mit Hinterrädern Rh versehen. Die Vorderräder Rv sind über Radaufhängungen RA mit der Rahmentragstruktur 1 verbunden und umfassen Radmittelpunkte Rmv, um die sie drehbar sind. Ähnlich umfassen die Hinterräder Rh Radmittelpunkte Rmh, um die sie drehbar sind. Die Hinterräder Rh sind zwillingsbereift, können aber auch einzelbereift ausgeführt werden. Ebenso ist es möglich, dass die Rahmentragstruktur 1 mit mehr als einer Hinterachse versehen wird. Die Rahmentragstruktur 1 kann zudem z.B. mit einer Motoreinrichtung zum Antreiben des Nutzfahrzeugs (z.B. einem Diesel- und/oder Elektromotor), einer Getriebeeinrichtung, einer Antriebswelle, etc. (nicht dargestellt) versehen werden.

Die Rahmentragstruktur 1 umfasst ferner einen Kraftstofftank T. Der Kraftstofftank T weist einen im Wesentlichen horizontal ausgerichteten Tankabschnitt auf, der die erste Tragkonstruktion 10 und die zweite Tragkonstruktion 20 verbindet. Zudem verläuft der horizontal ausgerichtete Tankabschnitt zwischen den Vorderrädern Rv, ragt über deren Radmittelpunkte Rmv nach vorne hinaus und ist im Wesentlichen auf dem Niveau der ersten Rahmentragstruktur 10 und der zweiten Rahmentragstruktur 20 angeordnet, um sie vorzugsweise seitlich innenliegend zu verbinden.

Figur 1 ist außerdem zu entnehmen, dass die erste Tragkonstruktion 10 und die zweite Tragkonstruktion 20 in eine Oberzugkonstruktion und eine Unterzugkonstruktion aufgeteilt sind, die heckseitig zusammengeführt sind und frontseitig mit dem Kraftstofftank T verbunden sind. Die Oberzugkonstruktion verläuft über dem Niveau der Radmittelpunkte Rmv der Vorderräder Rv und die Unterzugkonstruktion darunter.

Figur 2 zeigt eine Draufsicht auf die Rahmentragstruktur 1 der Figur 1. Figur 2 ist insbesondere zu entnehmen, dass die Rahmentragstruktur 1 eine dritte längsverlaufende Tragkonstruktion 30 umfasst, die mittig zwischen der ersten Tragkonstruktion 10 und der zweiten Tragkonstruktion 20 verläuft. Zudem verläuft die dritte Tragkonstruktion 30 unter dem Niveau der ersten Tragkonstruktion 10 und der zweiten Tragkonstruktion 20 und zwischen den Vorderrädern Rv und ragt über deren Radmittelpunkte Rmv nach vorne hinaus. Der Kraftstofftank T kann optional dazu genutzt werden, ein Fahrerhaus (nicht dargestellt) für das Nutzfahrzug zu tragen oder zumindest als Unterbau für das Fahrerhaus zu dienen. Ebenso kann der Kraftstofftank T optional dazu dienen, als Queraussteifungskonstruktion für die Rahmentragstruktur 1 zu wirken.

Die dritte Tragkonstruktion 30 ist mit der ersten Tragkonstruktion 10 und der zweiten Tragkonstruktion 20 über Verstrebungen verbunden, die im Wesentlichen V-förmig oder trianguliert ausgeführt sind, und über den Querträger 41, der eine im Wesentlichen U-förmige Gestalt bildet.

Figur 2 zeigt außerdem eine schematisch dargestellte Motoreinrichtung M zum Antreiben des Nutzfahrzeugs, die durch die dritte Tragkonstruktion 10 getragen werden kann.

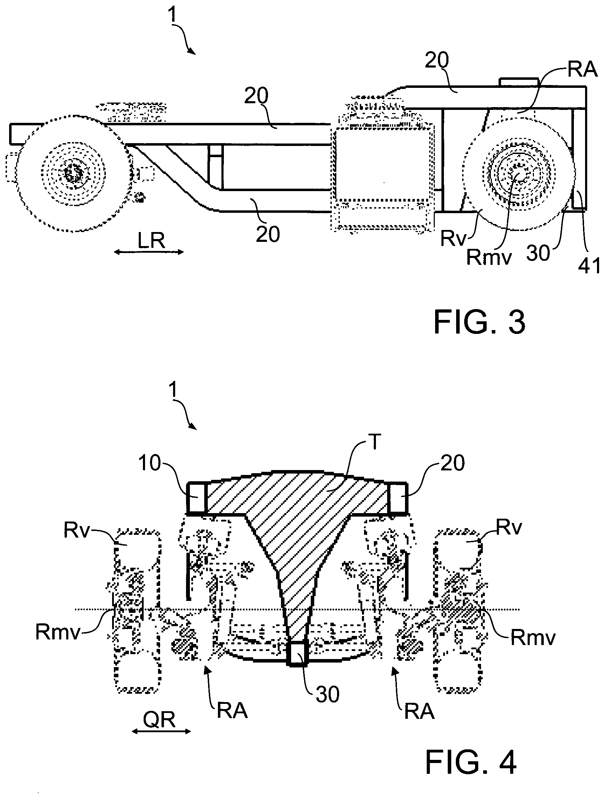

Figur 3 zeigt eine Seitenansicht der Rahmentragstruktur 1 der Figuren 1 und 2. Figur 3 ist insbesondere zu entnehmen, dass die erste Tragkonstruktion 10 und die zweite Tragkonstruktion 20 in eine Oberzugkonstruktion und eine Unterzugkonstruktion aufgeteilt sind und deren Oberzugkonstruktionen zwischen den Vorderrädern Rv verlaufen und über deren Radmittelpunkte Rmv nach vorne hinausragen. Die dritte Tragkonstruktion 30 verläuft unter dem Niveau der Radmittelpunkte Rmv der Vorderräder Rv und ragt über die Radmittelpunkte Rmv der Vorderräder Rv nach vorne hinausragt.

Unter Bezugnahme auf die Figuren 1 bis 3 sind die erste Tragkonstruktion 10 und die zweite Tragkonstruktion 20, insbesondere deren Oberzugkonstruktionen, nach seitlich außen und nach oben geführt, wodurch eine erhabene und aufgeweitete Tragstruktur erzielt wird, die zwischen den Vorderrädern Rv angeordnet ist und vorzugsweise über deren Radmittelpunkte Rmv nach vorne hinaus ragt.

Figur 4 zeigt eine Schnittansicht der Rahmentragstruktur 1 der Figuren 1 bis 3 in Längsrichtung LR nach vorne. Figur 4 ist insbesondere zu entnehmen, dass die dritte Tragkonstruktion 30 mit den Radaufhängungen RA der Vorderräder Rv verbunden ist und zwar insbesondere mit deren Lenkelementen (z.B. Quer-, Schräg- oder Längslenkerelemente). Die dritte Tragkonstruktion 30 dient dazu, im Wesentlichen horizontal wirkende Kräfte aus den Lenkelementen der Radaufhängungen RA aufzunehmen.

Figur 4 ist ferner zu entnehmen, dass der Kraftstofftank T einen im Wesentlichen horizontalen Tankabschnitt und einen von dem Tankabschnitt nach unten erstreckenden Tankabschnitt umfasst, die eine im Wesentlichen T- oder V-förmige Gestalt bilden.

Zudem kann Figur 4 entnommen werden, dass die dritte Tragkonstruktion 30 zur Abstützung des Kraftstofftanks T dient und zur Aufnahme von Längs- und Querkräften aus den Lenkelementen der Radaufhängungen RA.

Ferner sind in der in Figur 4 gezeigten Rahmentragstruktur 1 die erste Tragkonstruktion 10 und die zweite Tragkonstruktion 20 oben auf oberen Enden der Feder- und/oder Dämpferelemente der Radaufhängungen RA angeordnet und nehmen im Wesentlichen vertikal wirkende Kräfte aus den Feder- und/oder Dämpferelementen der Radaufhängungen RA auf. Zu erwähnen ist, dass es ebenso möglich ist, dass der Kraftstofftank T oben auf oberen Enden der Feder- und/oder Dämpferelemente der Radaufhängungen RA angeordnet ist und im Wesentlichen vertikal wirkende Kräfte aus den Feder- und/oder Dämpferelementen der Radaufhängungen RA aufnimmt.

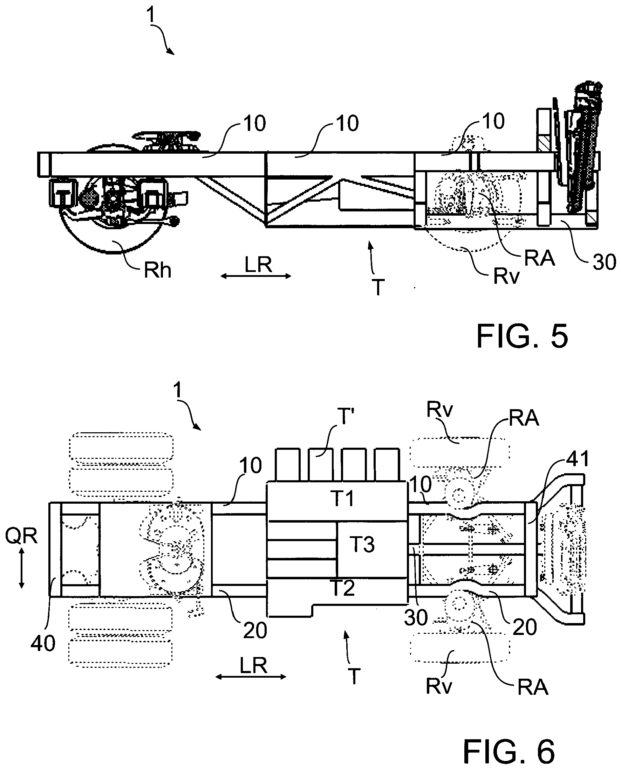

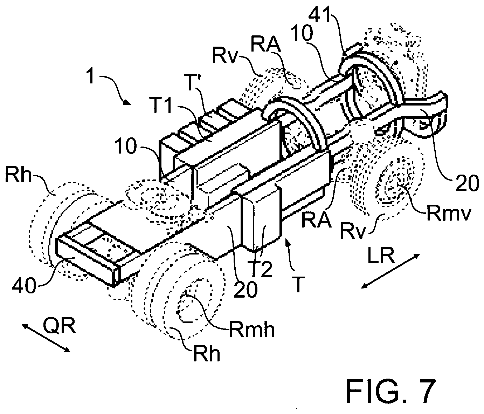

Figur 5 zeigt eine Seitenschnittansicht einer Rahmentragstruktur 1 gemäß einer anderen Ausführungsform der Erfindung, während Figur 6 eine Draufsicht und Figur 7 eine perspektivische Ansicht der Rahmentragstruktur 1 aus Figur 5 zeigt.

Unter Bezugnahme auf die Figuren 5 bis 7 weist der Kraftstofftank T Durchlassaussparungen auf, die von der ersten Tragkonstruktion 10 und der zweiten Tragkonstruktion 20 durchlaufen werden. Insbesondere umfasst der Kraftstofftank T einen ersten Tankabschnitt T1, der von der ersten Tragkonstruktion 10 durchlaufen wird und einen zweiten Tankabschnitt T2 der von der zweiten Tragkonstruktion 20 durchlaufen wird. Zudem umfasst der Kraftstofftank T einen dritten Tankabschnitt T3 (siehe z.B. Figur 6), der den ersten Tankabschnitt T1 und den zweiten Tankabschnitt T2 bodenseitig verbindet. Der erste Tankabschnitt T1 und der zweite Tankabschnitt T2 sind als seitliche Schenkelteile ausgeführt und der dritte Tankabschnitt T3 ist als Bodenteil ausgeführt, die zusammen eine im Wesentlichen U-förmige Gestalt bilden. Der Kraftstofftank T ist seitlich außen mit Lufttanks T' versehen.

Der Kraftstofftank T verläuft in Querrichtung QR mittig zwischen der ersten Tragkonstruktion 10 und der zweiten Tragkonstruktion 20 und verbindet die erste Tragkonstruktion 10 und die zweite Tragkonstruktion 20. Der Kraftstofftank T dient z.B. dazu, eine Motoreinrichtung zum Antreiben des Nutzfahrzeugs (z.B. ein Verbrennungsmotor, Dieselmotor und/oder Elektromotor - nicht dargestellt in den Figuren 5 bis 7) und optional eine Getriebeeinrichtung für das Nutzfahrzeug aufzunehmen und von unten und von seitlich außen einzufassen. Es ist ebenso möglich, dass die Motoreinrichtung und optional die Getriebeeinrichtung zwischen der ersten Tragkonstruktion 10, der zweiten Tragkonstruktion 20 und der dritten Tragkonstruktion 30 aufgenommen wird und vorzugsweise von der ersten Tragkonstruktion 10, der zweiten Tragkonstruktion 20 und der dritten Tragkonstruktion 30 getragen wird.

Zu erwähnen ist noch, dass die Tankeinrichtung T als mittragender Teil der Rahmentragstruktur 1 ausgeführt sein kann, z.B. als mittragender Teil der ersten Tragkonstruktion 10 und der zweiten Tragkonstruktion 20 dient, als Queraussteifungskonstruktion dient, als Tragvorrichtung zum Tragen einer Motor- und/oder Getriebeeinrichtung dient, als Tragvorrichtung zum Tragen eines Fahrerhauses dient und/oder zur Aufnahme von Radaufhängungskräften der Radaufhängungen für die Vorderräder des Nutzfahrzeugs dient. Zu diesen Zweck kann die Tankeinrichtung T mit Verstärkungsmitteln versehen sein, z.B. Verstärkungsverstrebungen, Verstärkungsrippen, Verstärkungsplatten, etc..

Die Erfindung ist nicht auf die vorstehend beschriebenen bevorzugten Ausführungsformen beschränkt. Darüber hinaus beansprucht die Erfindung auch Schutz für den Gegenstand und die Merkmale der Unteransprüche unabhängig von den in Bezug genommenen Merkmalen und Ansprüchen.

## Patentansprüche

1. Rahmentragstruktur (1) für ein Nutzfahrzeug, insbesondere Lastkraftwagen, vorzugsweise Sattelzugmaschine, mit:
- einer ersten längsverlaufenden Tragkonstruktion (10) und einer zweiten längsverlaufenden Tragkonstruktion (20), die in Querrichtung (QR) der Rahmentragstruktur (1) voneinander beabstandet sind,
- Radaufhängungen (RA) für Vorderräder (Rv) für das Nutzfahrzeug, und
- einer Tankeinrichtung (T) zur Fluidaufnahme,
wobei
- die Rahmentragstruktur (1) eine dritte längsverlaufende Tragkonstruktion (30) umfasst,
**dadurch gekennzeichnet, dass**
- die dritte Tragkonstruktion (30) zwischen den Vorderrädern (RV) für das Nutzfahrzeug verläuft und über deren Radmittelpunkte (Rmv) nach vorne hinaus ragt, zur Abstützung der Tankeinrichtung (T) und/oder einer Motoreinrichtung (M) zum Antreiben des Nutzfahrzeugs dient und mit Lenkelementen der Radaufhängungen (RA) verbunden ist.

2. Rahmentragstruktur (1) nach Anspruch 1, **dadurch gekennzeichnet, dass** die dritte Tragkonstruktion (30) mit den Radaufhängungen (RA) verbunden ist.

3. Rahmentragstruktur (1) nach einem der vorhergehenden Ansprüche, **dadurch gekennzeichnet, dass** die dritte Tragkonstruktion (30) dazu dient, Kräfte aus den Radaufhängungen (RA) aufzunehmen.

4. Rahmentragstruktur (1) nach einem der vorhergehenden Ansprüche, **dadurch gekennzeichnet, dass** die Tankeinrichtung (T) und/oder die erste Tragkonstruktion (10) und die zweite Tragkonstruktion (20) oben auf oberen Enden der Feder- und/oder Dämpferelemente der Radaufhängungen (RA) angeordnet ist und vorzugsweise dazu dient, Kräfte aus den Feder- und/oder Dämpferelemente der Radaufhängungen (RA) aufzunehmen.

5. Rahmentragstruktur (1) nach einem der vorhergehenden Ansprüche, **dadurch gekennzeichnet, dass** die dritte Tragkonstruktion (30) zwischen der ersten Tragkonstruktion (10) und der zweiten Tragkonstruktion (20) verläuft, vorzugsweise zumindest abschnittsweise mittig.

6. Rahmentragstruktur (1) nach einem der vorhergehenden Ansprüche, **dadurch gekennzeichnet, dass** die dritte Tragkonstruktion (30) unter dem Niveau der ersten Tragkonstruktion (10) und der zweiten Tragkonstruktion (20) verläuft.

7. Rahmentragstruktur (1) nach einem der vorhergehenden Ansprüche, **dadurch gekennzeichnet, dass** die dritte Tragkonstruktion (30) unter dem Niveau der Radmittelpunkte (RmV) der Vorderräder (Rv) verläuft.

8. Rahmentragstruktur (1) nach einem der vorhergehenden Ansprüche, **dadurch gekennzeichnet, dass** die dritte Tragkonstruktion (30) über eine Verbindungskonstruktion (41) mit der ersten Tragkonstruktion (10) und der zweiten Tragkonstruktion (20) verbunden ist, wodurch vorzugsweise ein Raumtragwerk geschaffen wird.

9. Rahmentragstruktur (1) nach Anspruch 8, **dadurch gekennzeichnet, dass** die Verbindungskonstruktion zumindest eines von folgenden umfasst:
- zumindest einen Querträger (41), der eine im Wesentlichen U-förmige Gestalt aufweist,
- zumindest eine Diagonalverstrebung, die eine im Wesentlichen V-förmige oder triangulierte Gestalt aufweist,
- eine Tankeinrichtung (T), die zugleich als Queraussteifungskonstruktion wirkt.

10. Rahmentragstruktur (1) nach einem der vorhergehenden Ansprüche, **dadurch gekennzeichnet, dass** die Tankeinrichtung (T) und/oder eine Motoreinrichtung (M) zum Antreiben des Nutzfahrzeugs zwischen der ersten Tragkonstruktion (10), der zweiten Tragkonstruktion (20) und der dritten Tragkonstruktion (30) aufgenommen ist.

11. Rahmentragstruktur (1) nach einem der vorhergehenden Ansprüche, **dadurch gekennzeichnet, dass** die Tankeinrichtung (T) aus zumindest einem im Wesentlichen hohlplattenförmigen Tankabschnitt ausgebildet wird.

12. Rahmentragstruktur (1) nach einem der vorhergehenden Ansprüche, **dadurch gekennzeichnet, dass** die Tankeinrichtung (T)
- ein Bodenteil und zwei äußere Schenkelteile umfasst, die vorzugsweise eine im Wesentlichen U-förmige Gestalt bilden, oder
- einen im Wesentlichen horizontalen Flanschteil und einen von dem Flanschteil erstreckenden Stegteil umfasst, die vorzugsweise eine im Wesentlichen L-, T- oder V-förmige Gestalt bilden.

13. Nutzfahrzeug, insbesondere Lastkraftwagen, vorzugsweise Sattelzugmaschine, **gekennzeichnet durch** eine Rahmentragstruktur (1) nach einem der vorhergehenden Ansprüche.

## Claims

1. A supporting frame structure (1) for a utility vehicle, in particular heavy goods vehicle, preferably semitrailer tractor, having:
- a first longitudinally running supporting construction (10) and a second longitudinally running supporting construction (20), said supporting constructions being spaced apart from one another in a transverse direction (QR) of the supporting frame structure (1),
- wheel suspension units (RA) for front wheels (Rv) for the utility vehicle, and
- a tank unit (T) for accommodating fluid,
wherein
- the supporting frame structure (1) comprises a third, longitudinally running supporting construction (30),
**characterized in that**
- the third supporting construction (30) runs between the front wheels (RV) for the utility vehicle and projects forwards beyond the wheel central points (Rmv) thereof, serves for supporting the tank unit (T) and/or a motor unit (M) for driving the utility vehicle and is connected to steering elements of the wheel suspension units (RA).

2. The supporting frame structure (1) according to Claim 1, **characterized in that** the third supporting construction (30) is connected to the wheel suspension units (RA).

3. The supporting frame structure (1) according to one of the preceding claims, **characterized in that** the third supporting construction (30) serves for accommodating forces from the wheel suspension units (RA).

4. The supporting frame structure (1) according to one of the preceding claims, **characterized in that** the tank unit (T) and/or the first supporting construction (10) and the second supporting construction (20) are/is arranged at the top on upper ends of the spring and/or damper elements of the wheel suspension units (RA) and preferably serve(s) to absorb forces from the spring and/or damper elements of the wheel suspension units (RA).

5. The supporting frame structure (1) according to one of the preceding claims, **characterized in that** the third supporting construction (30) runs, preferably centrally at least in sections, between the first supporting construction (10) and the second supporting construction (20).

6. The supporting frame structure (1) according to one of the preceding claims, **characterized in that** the third supporting construction (30) runs below the level of the first supporting construction (10) and of the second supporting construction (20).

7. The supporting frame structure (1) according to one of the preceding claims, **characterized in that** the third supporting construction (30) runs below the level of the wheel central points (RmV) of the front wheels (Rv).

8. The supporting frame structure (1) according to one of the preceding claims, **characterized in that** the third supporting construction (30) is connected via a connecting construction (41) to the first supporting construction (10) and to the second supporting construction (20), whereby a three-dimensional supporting framework is preferably created.

9. The frame support structure (1) according to Claim 8, **characterized in that** the connecting construction comprises at least one of the following:
- at least one transverse beam (41) which has a substantially U-shaped configuration,
- at least one diagonal strut formation which has a substantially V-shaped or triangular configuration,
- a tank unit (T) which acts simultaneously as a transverse stiffening construction.

10. The supporting frame structure (1) according to one of the preceding claims, **characterized in that** the tank unit (T) and/or a motor unit (M) for driving the utility vehicle is accommodated between the first supporting construction (10), the second supporting construction (20) and the third supporting construction (30).

11. The supporting frame structure (1) according to one of the preceding claims, **characterized in that** the tank unit (T) is formed from at least one tank portion which is substantially of hollow plate form.

12. The supporting frame structure (1) according to one of the preceding claims, **characterized in that** the tank unit (T)
- comprises a base part and two outer limb parts which preferably form a substantially U-shaped configuration, or
- a substantially horizontal flange part and a web part extending from the flange part, which flange part and web part preferably form a substantially L-shaped, T-shaped or V-shaped configuration.

13. A utility vehicle, in particular heavy goods vehicle, preferably semitrailer tractor, **characterized by** a supporting frame structure (1) according to one of the preceding claims.

## Revendications

1. Structure de support de cadre (1) pour un véhicule utilitaire, notamment un poids lourd, de préférence un tracteur de semi-remorque, avec :
- une première construction portante (10) longitudinale et une deuxième construction portante (20) longitudinale placées à une certaine distance l'une de l'autre dans la direction transversale (QR) de la structure de support de cadre (1) ;
- des suspensions de roue (RA) pour roues avant (Rv) pour le véhicule utilitaire ; et
- un dispositif de réservoir (T) pour loger du fluide ;
- la structure de support de cadre (1) comprenant une troisième construction portante (30) longitudinale ;
**caractérisée en ce que** :
- la troisième construction portante (30) s'étend entre les roues avant (RV) pour le véhicule utilitaire et ressort vers l'avant au-delà de leurs centres de roue (Rmv), pour soutenir le dispositif de réservoir (T) et/ou un dispositif de moteur (M) servant à entraîner le véhicule utilitaire et relié aux éléments de direction des suspensions de roue (RA).

2. Structure de support de cadre (1) selon la revendication 1, **caractérisée en ce que** la troisième construction portante (30) est reliée aux suspensions de roue (RA).

3. Structure de support de cadre (1) selon l'une quelconque des revendications précédentes, **caractérisée en ce que** la troisième construction portante (30) sert à absorber les forces provenant des suspensions de roue (RA).

4. Structure de support de cadre (1) selon l'une quelconque des revendications précédentes, **caractérisée en ce que** le dispositif de réservoir (T) et/ou la première construction portante (10) et la deuxième construction portante (20) sont disposés au-dessus sur les extrémités supérieures des éléments à ressort et/ou amortisseur des suspensions de roue (RA) et sert de préférence à absorber les forces provenant des éléments à ressort et/ou amortisseur des suspensions de roue (RA).

5. Structure de support de cadre (1) selon l'une quelconque des revendications précédentes, **caractérisée en ce que** la troisième construction portante (30) s'étend entre la première construction portante (10) et la deuxième construction portante (20), de préférence au moins en partie de façon centrale.

6. Structure de support de cadre (1) selon l'une quelconque des revendications précédentes, **caractérisée en ce que** la troisième construction portante (30) s'étend sous le niveau de la première construction portante (10) et de la deuxième construction portante (20).

7. Structure de support de cadre (1) selon l'une quelconque des revendications précédentes, **caractérisée en ce que** la troisième construction portante (30) s'étend sous le niveau des centres de roue (RmV) des roues avant (Rv).

8. Structure de support de cadre (1) selon l'une quelconque des revendications précédentes, **caractérisée en ce que** la troisième construction portante (30) est reliée, via une construction de liaison (41), à la première construction portante (10) et à la deuxième construction portante (20), créant ainsi de préférence un élément porteur en volume.

9. Structure de support de cadre (1) selon la revendication 8, **caractérisée en ce que** la construction de liaison comprend au moins un des éléments suivants :
- au moins un support transversal (41) présentant une forme pour l'essentiel en forme de U ;
- au moins une entretoise diagonale présentant une forme pour l'essentiel en forme de V ou triangulaire ;
- un dispositif de réservoir (T) servant simultanément de construction de rigidification transversale.

10. Structure de support de cadre (1) selon l'une quelconque des revendications précédentes, **caractérisée en ce que** le dispositif de réservoir (T) et/ou un dispositif de moteur (M) servant à entraîner le véhicule utilitaire est logé entre la première construction portante (10), la deuxième construction portante (20) et la troisième construction portante (30).

11. Structure de support de cadre (1) selon l'une quelconque des revendications précédentes, **caractérisée en ce que** le dispositif de réservoir (T) est réalisé à partir d'au moins une section de réservoir pour l'essentiel en forme de plaque creuse.

12. Structure de support de cadre (1) selon l'une quelconque des revendications précédentes, **caractérisée en ce que** le dispositif de réservoir (T) comprend
- une partie de fond et deux parties de côté extérieures prenant de préférence une forme pour l'essentiel en forme de U ou
- une partie de flasque pour l'essentiel horizontale et une partie d'étai s'écartant de la partie de flasque prenant de préférence une forme pour l'essentiel en L, en T ou en V.

13. Véhicule utilitaire, notamment poids lourd, de préférence tracteur de semi-remorque, **caractérisé par** une structure de support de cadre (1) selon l'une quelconque des revendications précédentes.
